# EUROPEAN PATENT APPLICATION

(11) **EP 1 724 691 A1**
(43) Date of publication of application: **22.11.2006**
(21) Application number: 04718408.0
(22) Date of filing: 08.03.2004
(51) Int. Cl.: G06F 15/00

(54) **ELECTRONIC TERMINAL DEVICE PROTECTION SYSTEM**

(71) Applicant: Global Friendship Inc., Tokyo 160-0004 (JP)
(72) Inventor: YASUKURA, Yutaka, 1510072 (JP)
(74) Representative: Leinweber & Zimmermann
(86) International application number: PCT/JP2004/002941
(87) International publication number: WO 2005/086012

(57) **Abstract**

There is provided an electronic terminal device protection system as follows. When participating in a service, an authentication ID and a hardware address of the terminal device used for the service are registered in a communication center. The communication center makes the terminal device download the e-tally of the authentication ID and e-tally information of the hardware address accompanying the application software. When using the service, the e-tally of the hardware address and the tally of the authentication ID which have been acquired according to the e-tally information by the terminal device are sent to the communication center. The communication center correlates the authentication ID received with the authentication ID stored and correlates the tally of the hardware address with the tally of the hardware address stored, thereby authenticating the terminal device to be connected.

## Description

### BACKGROUND OF THE INVENTION

### Field of the Invention

The present invention relates to a method for securing safety of a terminal device by use of authentication, and more particularly to an electronic terminal device protection system capable of guaranteeing safety even in a case where a user uses a terminal device borrowed from other owner at a hotspot or the like.

### Description of the Related Art

When a user attempts to connect a terminal device to the Internet by a commonly shared wireless Internet connection or at a hotspot (trade name) that has been rapidly spreading in recent years, it is necessary to verify that the terminal device legitimately belongs to an authorized user. In such a case, it has been common to approve the connection when the legitimate authorized user is instructed to enter his/her authentication information and the verification of legitimacy is successful.

However, terminal devices are much more efficiently utilized and convenient if they are accommodated to other users at hotspots and the like. Accordingly, if the legitimate authorized user approves the use, it is preferable to permit other user to connect and use the terminal device.

However, regardless of the approval by the legitimate authorized user, the authentication information should not be leaked from the terminal device. If the authentication information is stolen, then it is easy to do wrong, for example, the usage charge incurred for the terminal device can be added to the charge for another user. Furthermore, duplication of stored application software in a terminal device for use on other terminal devices should be prevented, or the authorization of its use may be diffused, and the owner of the copyright may have their rights infringed upon.

### SUMMARY OF THE INVENTION

It is therefore an object of the invention to provide an electronic terminal device protection system to a commonly shared wireless Internet connection method used in such as hotspots, which enables not only a party itself of a contract to simply use a terminal device but also another user approved by the party of the contract to use the terminal device, and further protects application software and authentication information stored in the terminal device from being leaked.

The electronic terminal device protection system of the invention is a system including a main computing device of a communication center providing an application software to thereby render predetermined services and an electronic terminal device of a user using the services by connecting to the main computing device through a communication network, which is characterized that the main computing device of the communication center registers an authentication ID of the user and a hardware address of the terminal device to be used for use of the services at the time of subscribing to the services; the main computing device downloads an electronic tally of the authentication ID and an electronic tally information for producing an electronic tally of the hardware address along with the application software to the electronic terminal device; the electronic terminal device sends an electronic tally of the hardware address produced on the basis of the electronic tally information and the electronic tally of the authentication ID to the main computing device at the time of use of the services; and the main computing device integrates the received electronic tally of the authentication ID with the stored electronic tally of the authentication ID to check them and integrates the received electronic tally of the hardware address with the stored electronic tally of the hardware address to check them, to thereby verify authenticity of the electronic terminal device to be connected.

In the electronic terminal device protection system of the invention, when a user applies for use of the service, the user has to register with the communication center the authentication ID of the user and the hardware address that is unique to the electronic terminal device to be used. Note that it should be appreciated that the "communication center" herein also refers to a computer system or a main computing device provided in the communication center. The hardware address includes the so-called media access control address (MAC); however, because it is only required to uniquely identify the terminal device, an appropriate identification uniquely allocated to the electronic terminal device, such as a CPU ID or a motherboard ID, may be used.

The communication center transforms the authentication ID into an electronic tally pair, embeds one half of the electronic tally pair into the application software such as a browser to be provided by the communication center, and instructs the terminal device to download it to thereby prepare for use of the service. The authentication information such as the electronic tally may be separately attached to the application software, instead of being embedded in the application software.

Note that an "electronic tally" herein refers to one tally part of electronic information having been divided into two or more parts with the special electronic tally method as disclosed in PCT/JP99/01350 and so on by the present applicant, and the original electronic information cannot be restored unless all the electronic tallies are collected and integrated all together.

The electronic tally method is a procedure in which the original electronic data is divided into a number of elements; the elements are randomly combined into several groups on the basis of random numbers; the elements belonging to each group are rearranged on the basis of random numbers to thereby generate several electronic tallies; the generated electronic tallies are sent or stored through separate routes respectively; they are collected as required; and the elements are rearranged through the opposing process to thereby restore the original information for use, and therefore the electronic tally method is of high security based on the secret sharing scheme.

When the electronic tallies are generated, security can be further improved by using compression encoding means or adding random numbers data into code words.

Now, when a terminal device requests the service of the communication center with connecting to a wireless Internet connection, for example, the communication center checks authenticity of the authentication ID with the electronic tally in the application software which is sent to the communication center.

After the authenticity of the authentication ID has been verified, the communication center transforms the stored hardware address into electronic tallies, and sends electronic tally information describing the corresponding electronic tally procedure to the terminal device. The terminal device then transforms its own hardware address into electronic tallies on the basis of the received electronic tally information, and sends several tallies designated in the received electronic tally information to the communication center. The communication center integrates them with the other tallies stored in it and checks whether or not the correct hardware address can be restored, so as to verify the authenticity of the terminal device to be connected.

When the verification results in success, the communication center generates new electronic tallies of the authentication ID, and instructs to download one half of them and rewrite the application software to prepare for the next connection.

Using the electronic terminal device protection system of the invention enables the terminal device to be connected by rote to a wireless Internet connection point without other complicated conventional user authentication procedures if the terminal device is legitimated. The system of the invention is also highly secure because the authentication information, the hardware address, and the like will never be released onto the Internet communication network except for the time of registration. Further, application softwares which have been copied from an authorized terminal device to other terminal device are easily eliminated from unauthorized uses to protect software rights by stopping application software from being started when the hardware address is not correct upon checking, because the hardware address of the unauthorized terminal device is different from the hardware address of the original terminal device.

The electronic terminal device protection system of the invention may be further arranged such that electronic tally information of user authentication is attached to the application software; the main computing device of the communication center stores shared electronic tallies of user authentication information of a legitimate authorized user; after receipt of a notice from a legitimate authorized user, an indication is made requesting electronic tallies of the user authentication at a request through an electronic terminal device for use of the service; the electronic terminal device generates electronic tallies of the user authentication by using the electronic tally information of the user authentication and sends them to the main computing device; and the main computing device refers them to the counterpart of the electronic tallies of the user authentication stored in the main computing device to thereby determine whether the request of the services is accepted or not.

Furthermore, the system may be arranged such that electronic tally information of user authentication is attached to the application software; the main computing device stores electronic tallies of the user authentication of a legitimate authorized user; after receipt of a notice from a legitimate authorized user, an indication is made requesting the user authentication at a request through an electronic terminal device for use of the service; the electronic terminal device generates electronic tallies of the user authentication input in the terminal device and sends the generated electronic tallies attached with the user authentication information to the main computing device; and the main computing device integrates them with the stored electronic tallies of the user authentication to thereby restore the user authentication, and refers the restored user authentication to the user authentication information sent from the electronic terminal device to thereby determine whether the request of the services is accepted or not.

According to the electronic terminal device protection system of the invention, when the terminal device is stolen, or the application software and the authentication information in the terminal device are stolen, an unauthorized use can be prevented by requesting a password and checking it against a pre-registered password of the legitimate authorized user. It is preferable that entry of a password will not be requested unless the legitimate authorized user realizes a theft or a loss and notifies of it, because request of entry of the password at every connection of a terminal device may decrease convenience of the wireless Internet connection and lose the support of users.

For verification using a password or the like, a user password is registered on the communication center at request of the service, and when any access is attempted after the user have notified, the password is then requested. If the password is not authentic, the connection is interrupted.

In addition, if the whole of a password is stored in the communication center, the password may be leaked when the communication center is attacked. Therefore, once the password is registered, it may be arranged such that the password is transformed into electronic tallies, only a part of the electronic tallies is stored in the communication center, and the electronic tally information is sent to and stored in the user's terminal device by incorporating it in the application software.

When the password is needed, the user enters the password into the terminal device, then the terminal device transforms it into electronic tallies according to the specified procedure and sends to the communication center one half of the tallies that will match with the electronic tallies stored in the communication center, and the communication center verifies the authenticity of the password based on the electronic tallies having been sent. The verification of the authenticity may also be carried out based on whether or not the received electronic tallies are the same as the electronic tallies stored in the communication center, or whether or not the electronic tallies having been sent the stored electronic tallies complement each other to restore the genuine password.

In addition, the user authentication is not limited to use of a password, but biological features such as fingerprint matching or voiceprint matching may also be used.

A checking method using such an electronic tally procedure has a lower risk of an outside leakage of a password or the like, and is therefore secure.

As well as generally enabling a simple connection, the electronic terminal device protection system of the invention can arrange to prevent unauthorized uses by inhibiting any user other than the legitimate authorized user from using of the system in case of a theft or a loss.

### BRIEF DESCRIPTION OF THE DRAWINGS

Fig. 1 is a block diagram illustrating a configuration of the terminal device protection system according to one embodiment of the invention;
Fig. 2 is a flowchart illustrating a procedure in the terminal device protection system according to the present embodiment; and
Fig. 3 is a flow chart illustrating a procedure of additional process in the present embodiment.

### DETAILED DESCRIPTION OF THE INVENTION

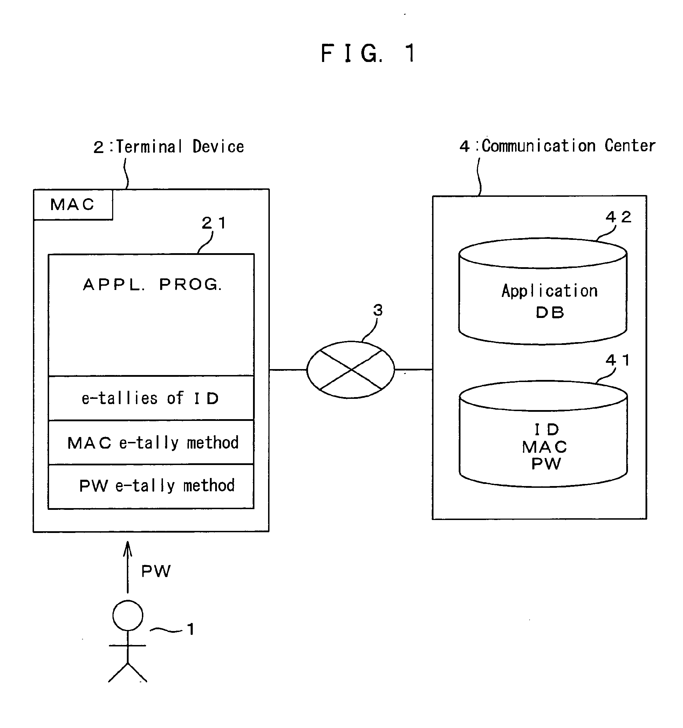

As shown in Fig. 1, the terminal device protection system of the present embodiment is a system in which when a terminal device 2 held by a user 1 is connected to a communication center 4 through a wireless communication network 3, the terminal device 2 is protected for preventing an information leakage. The wireless communication network 3 includes a commonly shared wireless Internet connection point such as the so-called hotspot.

If the terminal device 2 is authentic, the terminal device protection system does not require a complicated procedure including user authentication and allows the user 1 to connect to the communication center 4 by only an access from the terminal device 2. Particularly at the hotspot, a mechanism has been provided in which the terminal device 2 is almost automatically connected when it enters a service region. Also, it is arranged that if the terminal device 2 is lent to another user with the approval of a legitimate authorized user, the borrower can connect the device to the communication center 4 by the same manner as the legitimate authorized user operates it.

On the other hand, application software and authentication information stored in the user terminal device 2 should not be leaked even with the legitimate authorized user's approval.

Accordingly, the system of the present embodiment is arranged to incorporate electronic tally information into an application program 21, which is to be distributed to the terminal device 2 by the communication center 4, and to provide double or triple information protections using an electronic tally technology when an access to the communication center 4 is attempted through the terminal device 2.

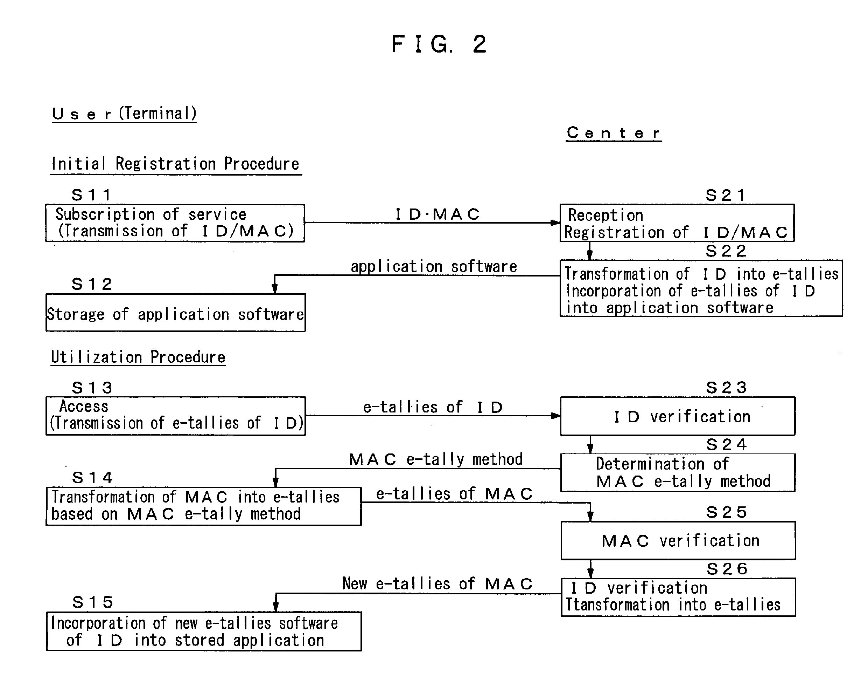

An example of a procedure for the protection is presented in Fig. 2, in which the processes are separately illustrated in the terminal device 2 and the communication center 4.

### Initial Registration Procedures

When the user 1 desires to receive any service through this system, he or she applies for a subscription of the service to the communication center 4 (S11). At this time, an identification ID as a receiver of the service and a hardware address unique to the terminal device 2 for receiving the service are sent to the communication center 4. A MAC address commonly used as a hardware address can be used; however, a device number uniquely assigned to a component such as a CPU or a motherboard required for the terminal device may also be used. In the following description, the MAC address shall be exemplarily used as the hardware address. The hardware address is preferably arranged to be automatically read and sent. Also, the identification ID may be set by the communication center 4.

Such information may be transmitted at any appropriate timing during the registration procedure. It may be entered in a specified application form and sent along with other required information, or may be sent after the registration has been accepted.

Upon receipt of the application of the service subscription, the communication center 4 registers him or her as a user unless there is any problem, and stores the identification ID and the MAC address in a client identification information database 41 (S21).

Then, application software necessary to enjoy the service is selected from an application database 42 and distributed to the terminal device 2. The application software is resident in the terminal device 2 to control the enjoyment of the service, and may be a program for connecting the terminal device to a wireless LAN at a hotspot or a browser program for browsing predetermined web pages. Prior to the distribution of the application software, information on the identification ID and the MAC address is embedded in the application software to use it for user verification when the service is used (S22).

A first of the information to be embedded in the application software is one half part of an electronic tally ID into which the identification ID has been transformed through the electronic tally method. Based on the electronic tally method, the identification ID is compression-encoded and divided into a number of elements, which are then separated into two groups one of which is to be stored in the communication center 4 and the other of which is to be stored in the terminal device 2, in each of the groups the elements are randomly combined and rearranged on the basis of random numbers, added with a random number having arbitrary length, and compression-encoded, and one half of the electronic tally ID is embedded in the application software, which is then sent to the terminal device 2. The other half of the electronic tally ID and information on the electronic tally procedure information are stored in the client identification information database 41 in the communication center 4.

A second of the information to be embedded in the application software is electronic tally information on the hardware address. The communication center 4 transforms the MAC address of the terminal device 2 into electronic tallies and records one half of the electronic tallies as well as embeds information on the electronic tally procedure information into the application software and sends them to the terminal device 2.

The terminal device 2 stores the application software 21 delivered from the communication center 4 and prepares for use of the service (S12).

### Procedure for Using Service

The user 1 connects the terminal device 2 to the wireless LAN 3 to receive the service through the terminal device 2. When the terminal device 2 requests an access, the electronic tally ID incorporated in the application software 21 is sent to the communication center 4 (S13).

The communication center 4 integrates it with the other half of the electronic tally ID stored in itself and then checks that the identification ID can be restored, to be thereby able to verify that the user 1 has the rights to enjoy the service (S23).

Subsequently, authenticity of the terminal device 2 to be connected is verified by determining whether or not its MAC address is the same as the registered one. In order to do so, the communication center 4 transforms the recorded MAC address into electronic tallies and stores one half of the electronic tally MAC address. Then, electronic tally information describing the electronic tally procedure is sent to the terminal device 2 (S24).

In addition, when an excessively high security level is not required, it may be arranged such that the MAC address is transformed into electronic tallies at registration, and a fixed electronic tally procedure incorporated in the application software 21 from the start can be used, instead of generating electronic tallies for every accesses.

The terminal device 2 transforms its own MAC address into electronic tallies on the basis of the received electronic tally information and sends the generated electronic tally MAC address to the communication center 4 (S14). If the terminal device 2 is identical to that preliminarily registered, the electronic tallies of the MAC address sent from the terminal device 2 should be the same as those generated in the communication center 4. For example, even if a user transplants the application software 21 into another terminal device and attempts to use it, authenticity of the terminal device 2 can be verified by simply comparing the two groups of electronic tallies because of the difference in MAC address of the terminal devices, i.e., the difference in electronic tallies (S25). In addition, it may be arranged such that a complementary part of the electronic tallies to the other part stored in the communication center 4 is generated by using the electronic tally procedure in the terminal device 2, and the two parts of the electronic tallies are integrated with each other for restoration at the communication center 4, to thereby determine whether or not the original MAC address can be restored.

If the two authentications are thus in success, the communication center 4 permits connection from the terminal device 2, and transforms once more the identification ID having been recorded into electronic tallies for the next access and sends the generated electronic tallies to the terminal device 2, assuming that the so-called one time ID is used (S26). The terminal device 2 stores the received electronic tallies by writing them in the predetermined positions of the stored application software 21 (S15).

For the next access, this new electronic tally ID will be used (S13 and the subsequent processes are repeated).

According to the electronic terminal device protection system of the present embodiment, the authentication information is secure from being stolen during communication, because the original of the authentication information is not exposed onto the network while using the services.

In addition, it can be arranged such that when the terminal device 2 is moving into a new hotspot, it almost automatically sends the electronic tally ID to make a connection to maintain communication.

Also, depending on levels of an information management and a network security required by a system operator, the electronic terminal device protection system may be formed to use only one selected from the MAC address and the identification ID.

### Procedure for Preventing Unauthorized Use

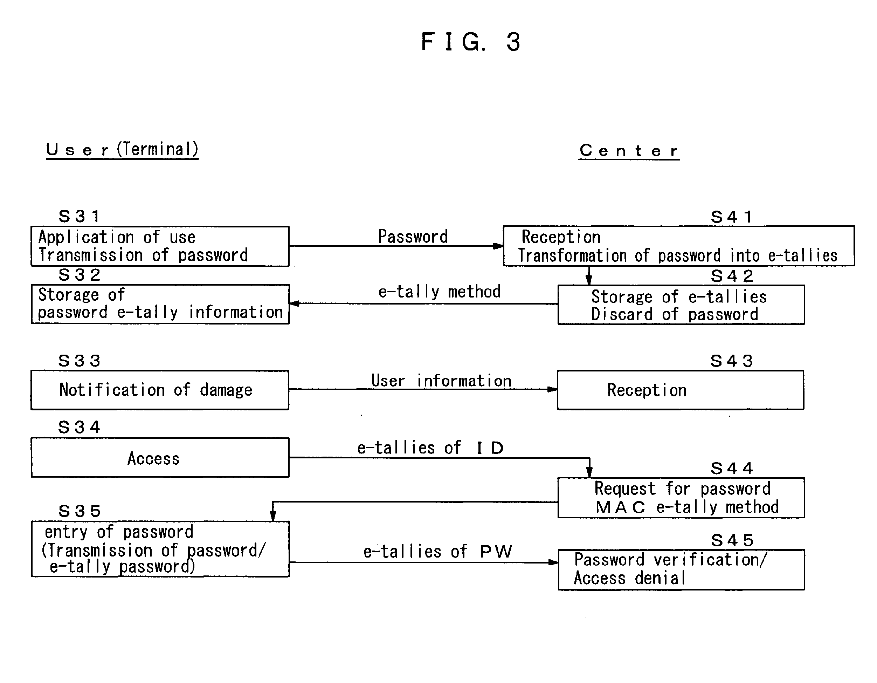

It is described, based on Fig. 3, a procedure for banning use of the terminal device in response to a request from the legitimate authorized user in order to prevent illegal use when the terminal device is stolen.

In order to use this countermeasure for preventing an unauthorized use, user authentication of the legitimate authorized user, such as a password, should be submitted at the time of the initial registration (S31).

The password is sent to the communication center 4 (S41). The communication center 4 transforms the password into electronic tallies, and stores in the database 41 the electronic tallies and the information on the procedure of producing the electronic tallies, and incorporates the electronic tally information into the application software and sends it to the terminal device 2 (S42). The password itself is discarded without being stored.

The terminal device 2 stores the application software 21 including the electronic tally information of the password (S32).

When the legitimate user 1 realizes damage and notifies the damage to the communication center 4 (S33), the communication center 4 performs user authentication based on any one of various types of authentication information including the password provided by the legitimate authorized user 1, and upon a success of the user authentication, the communication center 4 accepts a request for preventing an unauthorized use (S43).

Subsequently, when someone tries to access using the terminal device 2 along with the legitimate electronic tally ID (S34), the communication center 4 requests the password to the accessing person (S44).

When the user 1 enters the password having been used at the time of the initial registration, the terminal device 2 transforms the password into electronic tallies based on the electronic tally information on the password incorporated in the application software 21 and sends the electronic tallies and the password itself to the communication center 4 (S35).

The communication center 4 restores the password by integrating the received electronic tallies with the stored electronic tallies and verifies whether or not the received password and the restored password are identical to each other. If these passwords are not identical to each other, the connection will be denied because not the legitimate authorized user tries the access (S45). If these passwords are identical to each other, the use will be permitted normally because it is considered that the legitimate authorized user 1 uses the terminal device 2.

The password itself is discarded after it has done with the service. This is because the authentication information should be protected from being leaked even when the communication center 4 is attacked.

Further, the system may be formed to send and receive only the electronic tallies but not the user authentication information itself in order to obtain more reliable protection of the user authentication information.

In other words, the electronic tally information is sent to the terminal device 2 from the communication center 4 also at the time of the initial registration, the user authentication entered by the legitimate authorized user 1 is transformed into electronic tallies on the basis of the electronic tally information incorporated in the application software 21, and one half of the electronic tallies is sent to the communication center 4 to be stored.

The password is requested at an access from the terminal device 2 after the legitimate authorized user 1 have notified; but, what is sent to the communication center 4 from the terminal device 2 is only the electronic tallies generated from the password entered by the user on the basis of the same electronic tally information. The received half of the electronic tallies is checked against the stored electronic tallies, and if both of them are identical to each other, both of the passwords are determined identical to each other.

In this procedure, because the password is neither exposed onto the network nor present in the communication center 4, the authentication information has no risk of being leaked, and is hence secure.

It should be appreciated that as a less secure but simpler method, the terminal device 2 may simply send the password to the communication center 4, and the communication center 4 may check it against the password stored in the internal database for verification.

Any method among the above methods may be used depending on request level of an information management and a network security required by the system operator.

In addition, the user authentication may be provided using any of other types including biological features such as a fingerprint or a voiceprint, instead of using the password.

### Industrial Applicability

The electronic terminal device protection system of the invention enables to use securely and simply the application software for enjoying the service provided from the communication center by use of the electronic tallies having a high security based on the secret sharing scheme. Particularly, even the terminal device borrowed from the legitimate authorized user can be used without any trouble at a so-called hotspot, and also countermeasures can be taken against an unauthorized use in case of a theft.

## Claims

1. An electronic terminal device protection system, comprising a main computing device in a communication center for providing application software to thereby perform a predetermined service and a user's electronic terminal device for using the service by connecting to the main computing device through a communication network,
wherein an authentication ID and a hardware address of the terminal device to be used for use of the service are registered on the main computing device in the communication center at the time of subscribing the service; the main computing device instructs the electronic terminal device to download electronic tallies of the authentication ID and electronic tally information of the hardware address along with the application software; the electronic terminal device sends electronic tallies of the hardware address obtained on the basis of the electronic tally information and the electronic tallies of the authentication ID to the main computing device at the time of use of the service; and the main computing device integrates the received electronic tallies of the authentication ID with the stored electronic tallies of the authentication ID to check them and integrates the received electronic tallies of the hardware address with the stored electronic tallies of the hardware address to check them, to thereby verify authenticity of the electronic terminal device to be connected.

2. The electronic terminal device protection system according to claim 1, wherein electronic tally information of user authentication is attached to the application software; the main computing device in the communication center stores electronic tallies of user authentication information on a legitimate authorized user; an indication requesting electronic tallies of the user authentication is made at the time of a request for the use of the service from the electronic terminal device after the legitimate authorized user has notified; the electronic terminal device thereby generate the electronic tallies of the user authentication by using the electronic tally information of the user authentication and sends them to the main computing device; and the main computing device determines an acceptance or refusal of use of the service by checking them against stored electronic tallies of the user authentication.

3. The electronic terminal device protection system according to claim 1, wherein electronic tally information of user authentication is attached to the application software; the main computing device stores electronic tallies of the user authentication of a legitimate authorized user; an indication requesting the user authentication is made at the time of a request for use of the service provided from the electronic terminal device after the legitimate authorized user has notified; the user authentication having been entered through the electronic terminal device is transformed into electronic tallies, and the electronic tallies of the user authentication is sent to the main computing device along with the user authentication information; and the main computing device integrates them with the stored electronic tallies of the user authentication to thereby restore the user authentication, and checks them against the user authentication information having been sent to thereby determine an acceptance or a refusal of use of the service.
